# EUROPEAN PATENT SPECIFICATION

(11) **EP 4 017 453 B1**
(45) Date of publication and mention of the grant of the patent: **20.08.2025**
(21) Application number: 20870235.7
(22) Date of filing: 22.09.2020
(51) Int. Cl.: A61H 15/00

(54) **SYSTEMS AND METHODS FOR RELEASING MUSCULAR TENSION**
SYSTEME UND VERFAHREN ZUM LÖSEN VON MUSKELSPANNUNG
SYSTÈMES ET PROCÉDÉS DE LIBÉRATION DE TENSION MUSCULAIRE

(30) Priority: 25.09.2019 AU 2019903593
(43) Date of publication of application: 29.06.2022
(73) Proprietor: Paget, Michael, Glen Forrest, WA 6071 (AU)
(72) Inventor: Paget, Michael, Glen Forrest, WA 6071 (AU)
(74) Representative: Loo, Chi Ching
(86) International application number: PCT/AU2020/050998
(87) International publication number: WO 2021/056052

(56) References cited:
- JP-U- 3 204 660
- US-A- 1 688 764
- US-A- 5 614 300
- US-A1- 2012 259 257
- US-A1- 2015 245 977
- US-A1- 2017 216 131
- US-A1- 2017 290 734
- US-A1- 2017 340 511
- US-A1- 2017 340 511
- US-A1- 2019 247 268
- US-B1- 9 415 258

## Description

### TECHNICAL FIELD

The present disclosure is related to the field of muscle tension releasing devices. More particularly, the present disclosure relates to a muscular tension releasing system including a therapy device, and a strap for attaching to one or more ends of the therapy device. The strap enables a user to hold and position the therapy device on one or more muscles of a body part for controlling an extent of pressure applied on the one or more muscles.

### BACKGROUND

Any references to methods, apparatus or documents of the prior art are not to be taken as constituting any evidence or admission that they formed, or form part of the common general knowledge.

In today's fast and busy lifestyle, muscular pain has become so common with almost everyone. The middle-aged people and old aged people suffer from one or other type of muscular pain regularly. Muscular pain, such as Myofascial pain, is a chronic and very painful condition that affects a fascia that is a connective tissue that covers the muscles. Sometimes, the myofascial pain may involve more than one muscle. The fascia is a web like structure or a three-dimensional complex matrix of threads of muscles and filled with a clear gel like matter. The fascia is spread throughout the body of a user (like human), surrounding muscles, organs, nerves, bones, blood vessels and even the cells. Everything is held together and in place inside the body by fascia. The fascia is very flexible and infinitely adaptable. One or more knots may form in the fascia, which may be painful or may limit movement of an organ or muscle. Muscular pains may also be caused by inflammation of muscles or cell membranes. Doctors may prescribe some pain killers or medicines for relieving pain and reducing the internal inflammation. The medicines and pain killers may provide some relief but they have side effects.

Physiotherapy is another option for relieving muscular pain. The treatment of a muscular pain of a body part like neck, lower back, shoulder etc., usually require multiple sessions, hence a person may need to make multiple visits to a physiotherapy clinic. This in turn consumes lot of time and money.

Another option for relieving pain includes self-treatment by using an exercising/massaging device. Some non-limiting examples of the exercising/massaging devices that currently exists in the market may include a foam roller, a lacrosse ball, a theracane, a theragun, a peanut roller, a spikey ball, and a Battlestar device. All these exercising/massaging devices suffer from one or other limitations. For example, some are not easy to use or are heavy or are not compact. For using some exercising/massaging devices a user may require another person's help. Also, some of the exercising/massaging devices may not provide a long-term pain relief and are not very effective. Some of the devices may be effective but they are meant for a specific body part. For example, some devices, like spiker balls, are effective in releasing tension from the neck or shoulder, but such devices may not be suitable for use in leg pain. Therefore, the person may have to buy a different exercising/messaging device for different body parts, this in turn may increase the cost for self-treatment of the muscular pain.

In light of above, there exists a need for an improved muscular tension relieving device or systems. It is an object of the present invention to overcome or ameliorate the above discussed disadvantages of the prior art, or at least offer a useful alternative. Some examples of muscular tension relieving systems can be found in US2015245977, which shows the features of the preamble of claim 1, US9415258 and US2019247268.

### SUMMARY

To address the above-mentioned issues, the present disclosure provides a compact and easy to use muscular tension releasing apparatus including a therapy device for releasing tension from one or more muscles of various body parts, and a strap for attaching to one or more ends of the therapy device. The strap may help a user to hold and position the therapy device in accordance with a body part where the user wants to use the therapy device. The muscular tension relieving apparatus is easy to use, modular, compact to carry everywhere, and can be used to relieve muscular tension of any body part such as, but not limited to, back, spine, shoulders, neck. legs, and so forth, of a user.

An object of the present disclosure is to provide a muscular tension releasing apparatus that is compact, easy to use, and can be used on any body part for relieving muscular tension and/or massaging.

The present disclosure also provides a myofascial release device (MFRD) or self-massage device enabling a user to alleviate muscle tightness and relieve tight fascia resulting in improved biomechanical function and an immediate feeling of relief.

An embodiment of the present disclosure provides a muscular tension releasing system including a therapy device including a first end, a second end, and an elongate rod extending from the first end to the second end in a longitudinal direction. The elongate rod includes: a plurality of treads comprising a plurality of knobbly bits; a plurality of receiving units configured to receive at least one tread of the plurality of treads; one or more bearing surface present on at least one of the first end and second end; and a coating of a durable material. The system also includes a strap which when in use connects to at least one of the first end and the second end of the therapy device and extends in a lateral direction away from the therapy device, the strap comprising a plurality of interlocking units configured to connect to each other; one or more attachment units for attaching to at least one of the one or more bearing surface present on the first end and the second end of the therapy device; and at least one holding means for enabling a user to hold the strap for positioning the therapy device according to a body part where the user wants to put pressure on. The strap enables the user to control an amount of pressure exerted by the therapy device on one or more muscles of the body part. Optional features are as disclosed in dependent claims 2 to 15.

### DETAILED DESCRIPTION

Preferred features, embodiments and variations of the invention may be discerned from the following detailed description which provides sufficient information for those skilled in the art to perform the invention. The detailed description is not to be regarded as limiting the scope of the preceding summary of the invention in any way.

Specific embodiments of the present invention are described, by way of example only, with reference to the accompanying drawings, in which:
**Figure 1A** illustrates an exemplary muscular tension releasing system 100A, in accordance with an embodiment of the present disclosure;
**Figure 1B** illustrates another exemplary muscular tension releasing system 100B, in accordance with another embodiment of the present disclosure;
**Figure 2** illustrates an exemplary therapy device 200, in accordance with another embodiment of the present disclosure;
**Figure 3** illustrates another exemplary therapy device 300, in accordance with another embodiment of the present disclosure;
**Figures 4** illustrates a modular therapy device 400 in disassembled configuration, in accordance with another embodiment of the present disclosure; and
**Figure 5A** illustrates an exemplary muscular tension releasing system including a therapy device, in accordance with another embodiment of the present disclosure;
**Figure 5B** illustrates exemplary size and dimensions possible for the exemplary therapy device of the muscular tension releasing system; and
**Figure 5C** illustrates the exemplary therapy device of the muscular tension releasing system in disassembled configuration.

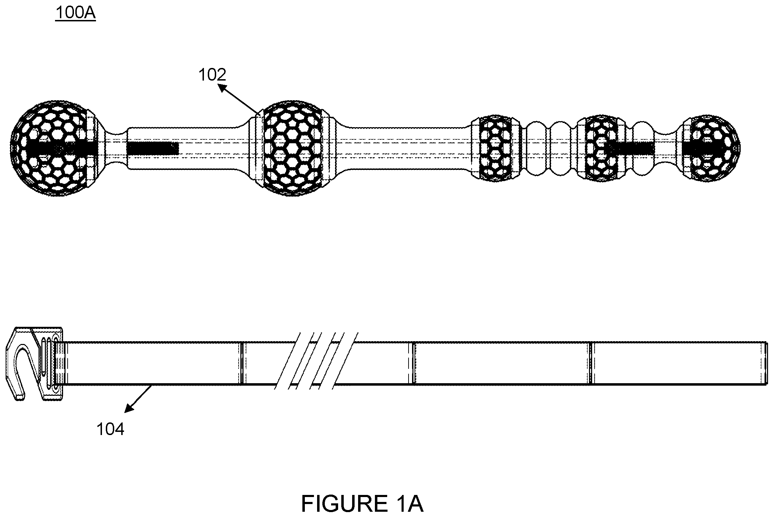

Referring to the **Figure 1A****,** the exemplary muscular tension releasing system 100A includes a therapy device 102 and a strap 104. The muscular tension releasing system 100A may be used to ease tension in muscles and relieve fascia that is knotted up. The fascia may be a web like structure formed of threads of muscles and filled with a clear gel like matter. The fascia is a three-dimensional complex matrix that may threads itself throughout the body of a user (like human), surrounding muscles, organs, nerves, bones, blood vessels and even the cells. Everything is held together and in place by the fascia. The fascia is impressively flexible and infinitely adaptable. One or more knots may form in the fascia, which may be painful or may limit movement of an organ or muscle.

The therapy device 102 includes a first end and a second end, a rod extending from the first end to the second end, a plurality of treads present on a surface of the rod, and one or more bearing surface present on at least one of the first end and second end. The rod of the therapy device 102 may be formed using a suitable material such as, but not limited to, steel, iron, aluminium, wood, and carbon fibre. In some embodiments, a material of the plurality of treads includes such as, but not limited to, at least one of a silicon, rubber, plastic, wood, hard rubber, and polyurethane elastomer. In some embodiments, the plurality of treads may be removable treads and may have varying shore hardness. Further, the treads may have different size, shape, and shore hardness. The shore hardness may be a measure of a resistance a material has to indentation. The therapy device 102 can be customised according to user's preferences, for example, the user may remove one or more treads and can use the therapy device 102 with or without the strap 104. In some embodiments, the shape of the treads may be at least one of hex design, spikey design, twin design like in a shape of a peanut shape for use on both sides on the spine at once, and so forth. In some embodiments, the plurality of treads remains in a fixed position for enabling greater pressure and control. In alternative embodiments, the treads are configured to rotate for massaging the body part. In other embodiments, one or more treads of the plurality of treads move and/or rotate and other treads of the plurality of treads remain fixed.

In some embodiments, the bearing surfaces, where an attachment unit such as a hook of a strap goes may spin and may have needle bearings beneath them. Further, in some embodiments, the system 100A may include a stand (may also be referred as a Jack) which may turn the system 100A into a stationary roller.

Further, the receiving units of the system 100A may be in shape of a peanut. Further, the system 100A may include at least one of a peanut head, a cylindrical head, a spiky head, and so forth. In some embodiments, the system 100A may include a small chrome ball on the one of the ends of the system 100A for jaw work.

The strap 104 includes one or more attachment units for attaching to at least one of the first end and the second end of the therapy device 102. The attachment units may be in shape of an anchor, hooks, loop, clips, and so forth. The strap 104 further includes one or more holding means for enabling a user to hold the strap 104 for positioning the therapy device 102 on a body part where the user wants to put pressure on. Further, the strap 104 enables the user to control an amount of pressure exerted by the therapy device 102 on one or more muscles of the body part. In some embodiments, at least one end of the strap 104 includes an anchor for fixing to one of the first end and the second end of the therapy device 102. Further in some embodiments, the strap 104 includes adjusting means for adjusting a length of the strap 104.

The therapy device 102 may be made of a rod, one or more receiving units, and a plurality of treads. The receiving units are configured to receive at least one of the plurality of treads. The rod includes a coating of suitable material such as, but not limited to, hard plastic, polyurethane elastomer, wood, rubber, and so forth. In some embodiments, the therapy device 102 includes an inbuilt vibration device configured to vibrate one or more treads of the plurality of treads. In some embodiments, the therapy device 102 includes a heating device for heating one or more treads of the plurality of treads.

The strap 104 may be used as an anchor for attaching to the therapy device 102 so that the user can put pressure on muscles or knotted fascia. In some embodiments, the strap 104 may be made of nylon webbing and may include hook that may clip or attach to aluminium bearing surfaces on each end of the therapy device. In an example, the strap 104 is 1900 mm long. The strap 104 enables a user to leverage without contorting against a wall and result in a lot of pressure at one or more muscles with little effort. The strap 104 may allow the user to use the therapy device 102 in a convenient manner for treating one or more or all points on the body of the user with little effort and with great control.

Further, the therapy device 102 may be used with or without the strap 104. For example, the therapy device 102 may be used on the floor or against the wall for treating one or more or all points on the body of the user with little effort and with great control.

Further, the muscular tension releasing system 100A can be used on any muscle or body part of the user such as, but not limited to, neck, shoulders, biceps, forearms, legs, thighs, lower back, lateral deltoid muscle, and so forth. In some embodiments, the user may use the muscular tension releasing system 100A as a self-massage device to alleviate muscle tightness and relieve tight fascia resulting in improved biomechanical function and an immediate feeling of relief.

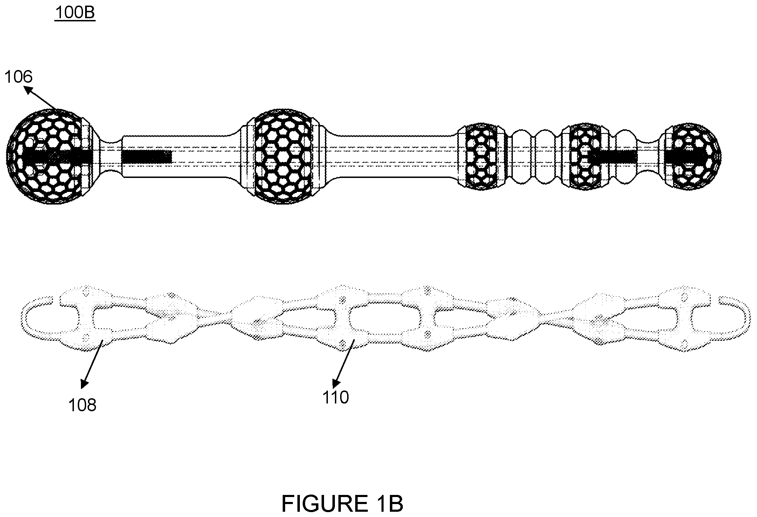

**Figure 1B** illustrates another exemplary muscular tension releasing system 100B includes a therapy device 106 and a strap 108 formed using a plurality of interlocking units 110. The therapy device 106 is similar to the therapy device 102 and includes a first end and a second end, a rod extending from the first end to the second end, a plurality of treads present on a surface of the rod, and one or more bearing surface present on at least one of the first end and second end. The rod includes a coating. The rod includes a coating of suitable material such as, but not limited to, polyurethane elastomer (hard plastic). In some embodiments, the therapy device 106 includes a heating device for heating one or more treads of the plurality of treads, and/or an inbuilt vibration device for vibrating the one or more treads of the plurality of treads.

In some embodiments, the treads may remain in a fixed position for enabling greater pressure and control. In alternative embodiments, the treads are configured to rotate for massaging the body part. The treads are configured to be removed from the therapy device. A material of the plurality of treads may include, but is not limited to, silicon, rubber, plastic, wood, hard rubber, and polyurethane elastomer.

As shown, the strap 108 includes the plurality of interlocking units 110 configured to connect to each other. The strap 108 is configured to compress and expand. Further, the strap 108 includes one or more attachment units for attaching to at least one of the first end and the second end of the therapy device 106. Examples of the attachment units may include, but are not limited to, hooks, anchor, clips, threads, and so forth. The strap 108 further includes one or more holding means for enabling a user to hold the strap 108 for positioning the therapy device 106 on a body part where the user wants to put pressure on. Further, the strap 108 enables the user to control an amount of pressure exerted by the therapy device 106 on one or more muscles of the body part. In some embodiments, at least one end of the strap 108 includes an anchor for fixing to one of the first end and the second end of the therapy device 106. The strap 114 may be formed using a flexible and durable material comprising nylon, cloth, plastic, rubber, and so forth.

In some embodiments, one or more interlocking units of the plurality of interlocking units 110 of the strap 108 may be removed or added for adjusting a length of the strap 108. In a non-limiting example, the length of the strap 108 is 1900 mm. The strap 108 is configured to compress and expand.

In some embodiments, the therapy device 106 may be made of a 14-millimetre (mm) steel rod coated in polyurethane elastomer (hard rubber) and may have at least five treads of silicon. The interlocking units 110 may be made up of rope, threads, nylon, rubber, fibre, cloth, plastic, and so forth. The strap 108 may be formed using a flexible and durable material comprising nylon, cloth, rubber, fabric, and plastic. In some embodiments, at least one end of the strap 108 may include an anchor for fixing to one of the first end and the second end of the therapy device. In some embodiments, the therapy device 106 includes a heating device for heating one or more treads of the plurality of treads, and an inbuilt vibration device for vibrating the one or more treads of the plurality of treads.

The muscular tension releasing system 100A, and 100B (hereinafter collectively may be referred as muscular tension releasing system 100) may be a myofascial release device (MFRD) or a self-massage device for enabling a user to alleviate muscle tightness and relieve tight fascia resulting in improved biomedical function and an immediate feeling of relief. Further, the muscular tension releasing system 100 may be used on any body part or muscles of the user's body such as, but not limited to, biceps, shoulders, lower back, lateral deltoid (i.e. an outside muscle next to a posterior deltoid muscle). The muscular tension releasing system 100 can do all the muscles of the body of the user.

In some embodiments, the muscular tension releasing system 100A, and 100B may include a stand including one or more rollers configured to be slotted into the one or more bearing surface of the therapy device.

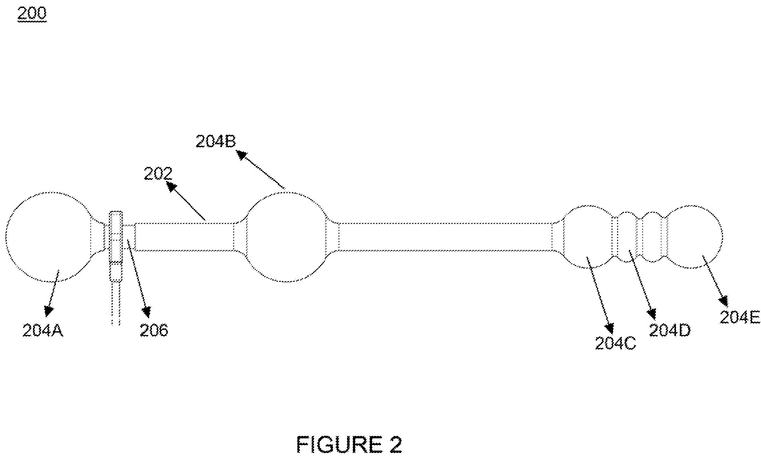

**Figure 2** illustrates the exemplary therapy device 200, in accordance with another embodiment of the present disclosure. As shown the therapy device 200 includes a first end and a second end, a rod 202 extending from the first end to the second end, a plurality of knob heads such as five knob heads 204A-204E formed at one or more location on an external surface of the rod 202, and one or more bearing surface 206 present on at least one of the first end and second end. The rod 202 of the therapy device 200 is formed using a material such as, but not limited to, steel, iron, aluminium, wood, and carbon fibre.

In some embodiments, the plurality of knob heads 204A-204E may have a suitable shape such as, but not limited to, spherical, oval, cubical, and so forth.

In some embodiments, the therapy device 200 includes a heating device for heating one or more knob heads of the plurality of knob heads 204A-204E. Further, in some embodiments, the therapy device 200 may include an inbuilt vibration device for vibrating the one or more knob heads of the plurality of knob heads 204A-204E. Further in some embodiments, the knob heads 204A-204E remain in a fixed position for enabling greater pressure and control. In alternative embodiments, the knob heads 204A-204E are configured to rotate for massaging the body part.

In an example, the therapy device 200 includes a 14 mm long steel rod coated in polyurethane elastomer (hard plastic) and has at least five knob heads 204A-204E. The knob heads 204A-204E may be formed using silicon and may have varying shore hardness. A strap may include at least one attachment unit such as one or more hooks for clipping onto the one or more bearing surface 206 on each of the first end and the second end of the therapy device 200. The one or more bearing surface 206 may be made up of aluminium.

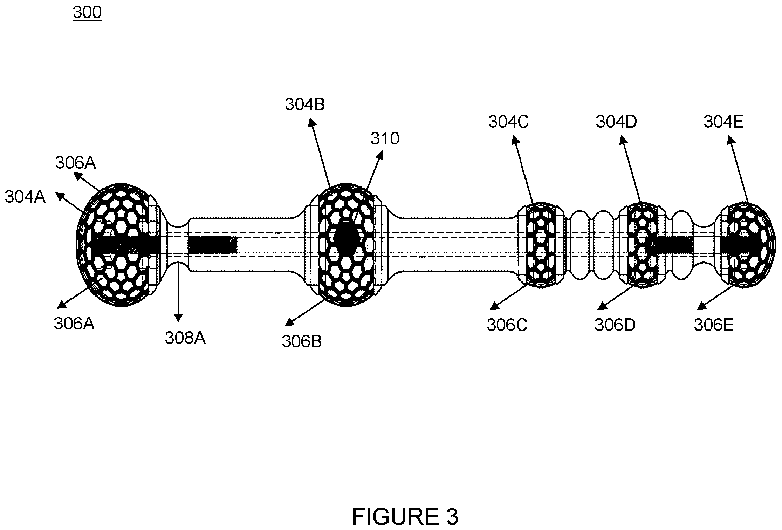

Turning now to the **Figure 3****,** another exemplary therapy device 300 is illustrated, in accordance with another embodiment of the present disclosure. As shown the therapy device 300 includes at least two ends including a first end and a second end, a rod 302 extending from the first end to the second end, a plurality of treads such as, five treads 306A-306E, present on a surface of the rod 302, and one or more bearing surface, such as two bearing surfaces 308A-308B, present on at least one of the first end and second end. The bearing surfaces 308A-308B may be formed using a suitable material such as, but not limited to, aluminium, steel, copper, wood, and carbon fibre. The rod 302 further includes a coating of a durable material. Further, a shape of the plurality of treads 306A-306E may be a twin design comprising a peanut shaped tread(s) for use on both sides of a spine at once.

The rod 302 is an elongate rod 302 extending from the first end to the second end. The elongate rod 302 includes a coating of a durable material such as, but not limited to, polyurethane elastomer. The elongate rod 302 further includes the plurality of treads 306A-306E. The rod 302 further includes a plurality of receiving units, such as five receiving units 304A-304E, configured to receive at least one tread of the plurality of treads 306A-306E. Each of the plurality of treads 306A-306E includes a plurality of knobbly bits. The rod 302 further includes one or more bearing surface, such as the two bearing surfaces 308A-308B, present on at least one of the first end and second end.

In some embodiments, the receiving units 304A-304E may vary in shape, for example, the shape may be spherical, cylindrical, peanut-shaped oval, cubical, and so forth. In some embodiments, all the receiving units 304A-304E may be of same size and shape. In alternative embodiments, one or more of the receiving units 304A-304E may be of different size and shape. Further, the shape, and size of the receiving units 304A-304E is according to a shape and size of the plurality of treads 306A-306E. As shown, the receiving units 304A-304E are spherical in shape in the therapy device 300. In some embodiments, a receiving unit present towards at least one of the first and second ends may be referred as a head. For example, the receiving unit 304A may be referred as a head. The head may be peanut shaped in some embodiments.

The knobbly bits of the plurality of treads 306A-306E are designed in such a way so when a user put a hook (or attachment unit of the strap of the muscular tension releasing system) on a bearing surface near a big end, for example the bearing surface 308A near the first end, then a tread with a hex design 310 sits right in the meat of the top of user's your trapezius muscle.

The rod 302 and/or the receiving units 304A-304E may be formed using a suitable material comprising such as, but not limited to, steel, iron, aluminium, wood, and carbon fibre. In some embodiments, the receiving units 304A-304E are configured to be detached from the rod 302. In alternative embodiments, the receiving units 304A-304E may form a unitary structure with the rod 302 and may not be detached from the rod 302.

Further, a material used for making the plurality of treads 306A-306E may include such as, but not limited to, silicon, rubber, plastic, wood, hard rubber, and polyurethane elastomer. In some embodiments, the plurality of treads 306A-306E are removable treads. In other embodiments, the treads 306A-306E configured not to be removed from the receiving units 304A-304E. Further, a shape of the treads 306A-306E and/or the knobbly bits on the treads 306A-306E may include such as, but not limited to, a hex design, a spiky design, and a twin design comprising a peanut shape for use on both sides of a spine at once. In some embodiments, the treads 306A-306E are fixed and remain in a fixed position for enabling greater pressure and control. In alternate embodiments, the plurality of treads 306A-306E are configured to rotate for massaging the body part.

In some embodiments, the therapy device 300 may include an inbuilt vibration device configured to vibrate one or more treads of the plurality of treads 306A-306E. Further, the therapy device 300 may include a heating device for heating at least one tread of the plurality of treads 306A-306E.

In some embodiments, a stand comprising one or more rollers can be slotted into the one or more bearing surface like the surface 308A of the therapy device 300. In some embodiments, an anchor of the strap can fix to one of the first end and the second end of the therapy device 300.

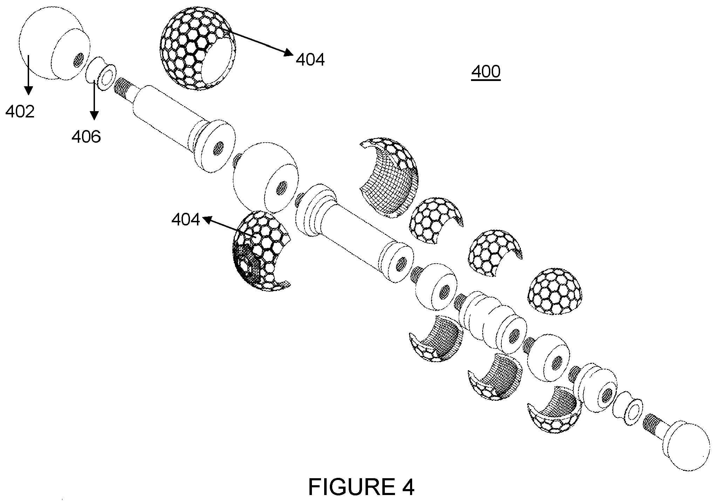

Referring to the **Figure 4****,** the modular therapy device 400 in disassembled configuration is illustrated, in accordance with an embodiment of the present disclosure. The modular therapy device 400 includes multiple pieces as shown. In an embodiment, the modular therapy device 400 includes eleven pieces. All the pieces may be assembled together to form the modular therapy device 400. Though not shown, but a person skilled in the art will understand that the modular therapy device 400 may include more or less than eleven pieces.

The modular therapy device 400 once assembled includes a first end and a second end as shown in the **Figure 4****.** The modular therapy device 400 also includes a rod extending from the first end to the second end, a plurality of receiving units 402 configured to receive at least one of a plurality of removable treads 404, and one or more bearing surface 406, e.g. bearing 1 and bearing 2, present on the first end and the second end. The removable treads 04 may also be referred as treads 404 without change in its meaning.

In some embodiments, the modular therapy device 400 may include a heating device for heating one or more treads of the plurality of removable treads 404. In further embodiments, the modular therapy device 400 includes an inbuilt vibration device for vibrating the one or more treads of the plurality of treads 404.

In some embodiments, the one or more treads or the plurality of treads 404 remain in a fixed position for enabling greater pressure and control on one or more muscles of a body part that is in contact with the one or more treads. In alternative embodiments, the one or more treads or the plurality of treads 404 are configured to rotate for massaging the body part. In some embodiments, the one or more treads or the plurality of treads 404 may vibrate.

Further, a shape of the plurality of treads 404 may include at least one of a hex design, a spiky design, and a twin design such as in shape of a peanut shape for use on both sides of a spine at once. In some embodiments, the plurality of removable treads 04 are configured to be removed from the plurality of receiving units 402 of the modular therapy device 400. In some embodiments, non-limiting examples of a material of the plurality of treads 404 may include at least one of a silicon, rubber, plastic, wood, hard rubber, and polyurethane elastomer.

The modular therapy device 400 may be used on any body part with or without a strap. The strap may be similar to the strap 104 of **Figure 1A****.** The strap 104 includes one or more attachment units such as, a hook for attaching to at least one of the first end and the second end of the modular therapy device 400. The strap 104 further includes one or more holding means for enabling a user to hold the strap 104 for positioning the modular therapy device 400 on a body part where a user wants to put pressure on. Further, the strap 104 enables the user to control an amount of pressure exerted by the modular therapy device 400 on one or more muscles of the body part. In some embodiments, at least one end of the strap 104 includes an anchor for fixing to one of the first end and the second end of the modular therapy device 400.

The modular therapy device 400 is easy to assemble and disassemble. Once disassembled, the modular therapy device 400 becomes compact that may be easy to carry. Further, the modular therapy device 400 may be formed using lighter and durable material such as, but not limited to, carbon fibre, aluminium, and so forth.

In some embodiments, the bearing surfaces 406, where the attachment unit such as the hook of the strap goes may spin and/or may have needle bearings beneath them. Further, in some embodiments, the system 400 may include a stand (may also be referred as a Jack) which may turn the system 400 into a stationary roller.

Further, the one or more of the receiving units 404 of the system 400 may be in shape of a peanut. Further, the system 400 may include at least one of a peanut head, a cylindrical head, a spiky head, and so forth. In some embodiments, the system 400 may include a small chrome ball on the one of the ends of the system 400 for jaw work.

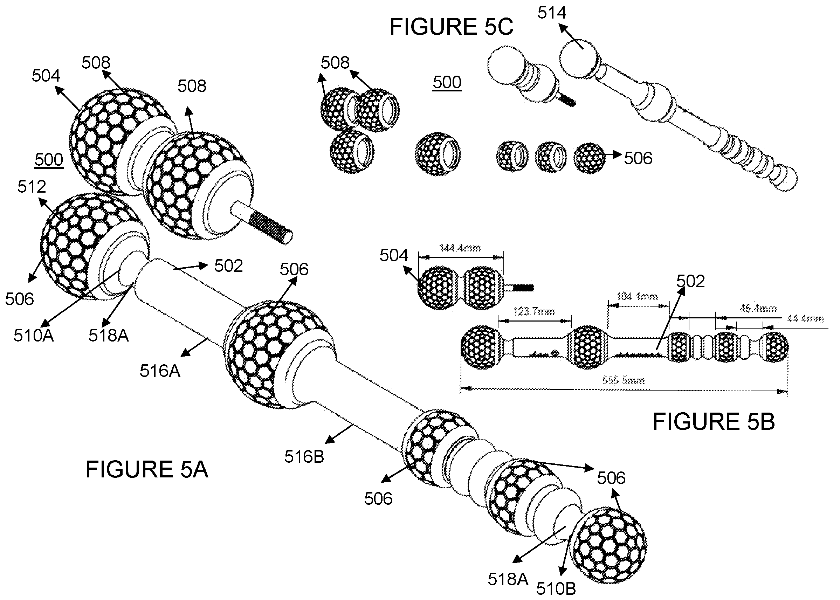

**Figure 5A** illustrates an exemplary muscular tension releasing system 500, in accordance with another embodiment of the present disclosure. The system 500 includes a modular therapy device 502 and an attachment accessory 504 for the therapy device 502. The therapy device 502 includes a rod extending from a first end 510A to a second end 510B. The attachment accessory 504 can replace at least one or both or the ends 510A-510B of the therapy device 502. The rod includes a plurality of treads 506 including a plurality of knobbly bits 512. Further, the rod includes a plurality of receiving units 514 configured to receive at least one tread of the plurality of treads 506. In some embodiments, the treads 506 may have spikes. In some embodiments, the receiving units 514 present towards the first end and the second end may be referred as heads. Further, at least one of the heads may be in any suitable shape such as, but not limited to, spherical, peanut, and cylindrical. The rod also includes one or more bearing surface present on at least one of the first end 510A and second end 510B.

One or both of the heads (i.e. spheres at each of the ends 510A-510B) can be removed and the attachment accessory 504 can be attached to that specific end of the ends 510A-510B. As shown, the attachment accessory 504 is configured to be attached to a bearing or nexus part 518A or 518B of the rod. The rod includes a shank 516 including a top shank 516A and a centre shank 516B. The end spheres can be screwed into the main shank 516 - enabling the replacement and/or assembly of the nexus parts 518A-518B. The nexus parts 518A-518B are the positions for attachment to the hook/anchor of the strap and may have bearings underneath so they spin freely in the preferred embodiment. Without the nexus parts 518A-518B, the therapy device 502 may be made as a single piece in some embodiments. The nexus parts 518A-518B may greatly enhance the experience and would need to be slid onto the central steel shaft upon assembly. In some embodiments, when wood is used to make the therapy device, then the therapy device will not have bearing surfaces that spin freely.

The attachment accessory 504 can be screw into either of the ends 510A-510B. Further, in some embodiments, the attachment accessory 504 may be in shape of a peanut as shown. The peanut shaped accessory attachment 504 may be used on the muscles going up either side of the spine of the user.

In some embodiments, the attachment accessory 504 may include roller(s) to offer more stability on smaller muscles such as, the Terres Minor. The rollers type attachment accessory may be of slightly longer dimension to the spheres - for example, but not limited to, 1.5 times the size of the spheres. In some embodiments, the accessory attachment 504 may be shaped like a cylinder - or roller.

Further, in alternative embodiments, the accessory attachment 504 may be a spikey ball. The purpose of the spikey ball type attachment accessory 504 may be to dig into the fibres of the muscles and fascia. The spikey ball may be some user's preferred coating for myofascial devices.

In some embodiments, the attachment accessory 504 may include smooth metallic sphere in three sizes, large, medium, and small (about 20 mm in diameter) The smooth metallic sphere type of the attachment accessory 504 is designed to slide over the surface of the skin of the user. The smooth metallic sphere type of the attachment accessory 504 might be of preference to professionals using the device 502 on their clients with massage oil - such as massage therapists and exercise physiologists etc. The smaller sizes would be great for the jaw area and temple etc.

Further, the attachment accessory 504 may include a twin design or a double head that may be in any suitable shape such as, but not limited to, spherical, peanut, and cylindrical. Further, the attachment accessory 504 may have a spiky head in some embodiments. Each of the modular therapy device 502 and the attachment accessory 504 includes a plurality of treads 506 and 508 that may further include a plurality of knobbly bits.

**Figure 5B** illustrates exemplary size and dimensions possible for the exemplary muscular tension releasing system 500 and various individual parts of the therapy device 502. In some embodiments, the treads 506 and 508 may have spikes. Further, the length of the device 502 may vary. In some embodiments, the therapy device 502 may include a heating device for heating one or more treads of the plurality of treads 506. Further, in some embodiments, the therapy device 502 may include an inbuilt vibration device for vibrating the one or more treads of the plurality of treads 506.

**Figure 5C** illustrates the exemplary therapy device 502 of the muscular tension releasing system 500 in disassembled configuration. The plurality of treads 506 and 508 comprising the plurality of knobbly bits can be removed from the modular therapy device 502 and the attachment accessory 504, respectively as shown in the Figure 5C. The system 500 includes a strap including one or more attachment unit(s) for attaching to at least one of the first and second ends; and at least one holding means for enabling a user to hold the strap for positioning the therapy device 502 according to a body part where the user wants to put pressure on. The strap may also enable the user to control an amount of pressure exerted by the therapy device 502 on one or more muscles of the body part. The shape, length, and size of the strap may vary.

The present disclosure provides a myofascial release device configured to be used to ease tension in muscles and relieve fascia that is knotted up. The myofascial release device includes a therapy device having a first end and a second end, and a strap. The strap may be formed using a suitable material such as, but not limited to, nylon. In an example, the strap includes a nylon webbing. The strap includes one or more hooks for attaching to or clipping onto a bearing surface on each of the first end and the second end. The strap may be used as an anchor to allow the user to put pressure on a body part or a knotted fascia.

According to an aspect of the present disclosure, the therapy device includes at least five treads made up of a suitable material such as, but not limited to, silicon. The plurality of treads are removable treads.

In some embodiments of the present disclosure, the rod of the therapy device is a 14-millimetre steel rod encased in a polyurethane elastomer or hard rubber. The rod further includes a plurality of removable silicon treads.

In alternative embodiments of the present disclosure, the rod of the therapy device is made of aluminium. The treads of the therapy device are removable and may be formed using a suitable material such as, but not limited to, rubber, or silicon.

In alternative embodiments of the present disclosure, the rod of the therapy device is formed using a lightweight material like, but not limited to, carbon fibre. The rod may include multiple modules that are configured to assembled together for making a rod. The multiple modules may be unscrewed or may be break down in the middle of the rod so that it can be easily carried from one location to other.

In some embodiments of the present disclosure, the plurality of treads have varying shore hardness. In some embodiments of the present disclosure, a material used for making the plurality of treads may include but are not limited to, silicon, and rubber.

In some embodiments of the present disclosure, the muscular tension releasing system can be used to release tension from all the muscles in a body of the user. The muscular tension releasing system can be used with the strap or without the strap. For example, the therapy device alone may be used on the floor or against the wall to massage one or more muscles (or muscles' points) on the body. This way multiple muscles can be massages or treated with little effort and with great control.

According to an aspect of the present disclosure, the strap includes one or more holding means for enabling the user to hold the strap via hand or foot. In some embodiments of the present disclosure, the one or more holding means (or units) are sewn at 200 mm intervals.

The disclosed muscular tension releasing system may include a therapy device which is a modular device formed using multiple pieces. For example, in some embodiments, the therapy device is formed using eleven pieces and five treads.

In some embodiments of the present disclosure, the strap is made of a flexible material and an ultra-durable material for usage in outdoors such as, but not limited to, nylon, cloth, and plastic. The length and width of the strap may vary.

The strap includes multiple interlocking units. The multiple interlocking units may be connected to each other to form a chain like structure. The strap including the multiple interlocking units is configured to compress and expand.

The present disclosure provides a myofascial release device (MFRD) including a therapy device including a rod, and one or more treads configured to be attached to multiple places on a surface of the rod. The MFRD is a self-massage device configured to enable a user to alleviate muscle tightness and relieve tight fascia resulting in improved biomechanical function and an immediate feeling of relief.

According to an aspect of the present disclosure, the strap enables leverage by the therapy device without contorting against a wall and resulting in a lot of pressure exerted by the therapy device with little effort. The strap enables a user to use the therapy device conveniently and the muscular tension releasing system can be used on the couch. This is important because whilst people have realised the importance of treating fascia - but it's hard to find the time. The people can use the disclosed muscular tension releasing system while watching television or listening to music.

The disclosed muscular tension releasing system is configured to be used on all body parts of the user. For example, but not limited to, neck, shoulders forearms, biceps, lower back, lateral deltoid (i.e. an outside shoulder muscle).

The disclosed muscular tension releasing system may include a therapy device comprising removable treads of varying shore hardness. This may allow the user to customise the muscular tension releasing system according to their preferences and needs. For example, if the user need to treat muscles in one area only then the user may attach two or three treads on the therapy device.

According to an aspect of the present disclosure, the plurality of treads of the therapy device may have varying shape and size such as, depending on a shape and size of the plurality of receiving units of the therapy device. In some embodiments, the treads may have hex design, alternatively the treads may have a spikey design. In alternative embodiments, the plurality of treads may have a twin design like a peanut shape for use on both sides of the spine at once. More designs, shape, and size of the treads are possible. Further, the shape, size, and/or shore hardness of the treads may be customized according to the user requirement.

According to an aspect of the present disclosure, the muscular tension releasing system has an extensible and modular design. The therapy device may be formed using one or more modules or pieces (See **Figure 5**). Therefore, the therapy device may be assembled for using, and may be disassembled when not in use for storage or for carrying from one place to other. Hence, the muscular tension releasing system is compact and may be stored in less storage space. In some embodiments, the rod of the therapy device is formed using eleven pieces and five treads.

In some embodiments, the therapy device includes a single rod includes one or more ends, bearing surfaces, and slots for accepting one or more treads. The treads may or may not be removable from the therapy device.

The disclosed muscular tension releasing system can be designed in different lengths. Further, a shape and size of the treads may vary depending on a requirement of the user.

According to an aspect of the present disclosure, the treads comprises knobbly bits that are positioned in a manner to press a particular type of muscle. The hook of the strap is put on the bearing surface of the therapy device near one of the ends (an end near the big tread) - then one of the treads (for example, a tread with a red hex) may sit right in the meat of the top of a trapezius muscle of the user.

An embodiment of the present disclosure provides a myofascial release system configured to use for releasing tension in muscles and relieve fascia that is knotted up. The system includes a therapy device and a strap. The strap may be formed using a flexible and durable material such as, but not limited to, a nylon webbing. Further, the strap may include one or more attachment units, such as one or more hooks, for attaching or clipping onto one or more bearing surfaces on each end. Further, the strap includes one or more holding means for enabling a user to hold the strap for positioning the therapy device in accordance with a body part where the user wants to put pressure on. The holding means may include at least one of a hand holds and a foot holds which may be sewn at an interval of 200 millimetre on the strap. In some embodiments, the strap may be 1900 millimetre long. Further, the therapy device may be made of a 14-millimetre steel rod coated in polyurethane elastomer and may have at least five removable treads made of silicon or rubber. The removable treads may have a varying shore hardness. The strap may be used as an anchor so that the user can put pressure on a knotted fascia.

In some embodiments, a length of the therapy device without the treads may be 545 millimetre. Each of the treads when installed on the rod of the therapy device may increase the length of the therapy device approximately by 7millimetre to 10 millimetre on each end of the therapy device.

The muscular tension releasing system may be formed in any suitable colour such as, but not limited to, red, blue, black, white, blue, and so forth. In some embodiments, more than one colour may be used for making the muscular tension releasing device.

In some embodiments, the muscular tension releasing system further includes a stand having one or more rollers configured to be slotted into the one or more bearing surfaces of the therapy device. The stand may be a removed from the therapy device when not required.

In compliance with the statute, the invention has been described in language more or less specific to structural or methodical features. The term "comprises" and its variations, such as "comprising" and "comprised of" is used throughout in an inclusive sense and not to the exclusion of any additional features. It is to be understood that the invention is not limited to specific features shown or described since the means herein described comprises preferred forms of putting the invention into effect. The invention is, therefore, claimed in any of its forms or modifications within the proper scope of the appended claims appropriately interpreted by those skilled in the art.

Throughout the specification and claims (if present), unless the context requires otherwise, the term "substantially" or "about" will be understood to not be limited to the value for the range qualified by the terms.

## Claims

1. A muscular tension releasing system (100B) comprising:
a therapy device (106) comprising a first end, a second end, and an elongate rod extending from the first end to the second end in a longitudinal direction, wherein the elongate rod comprises:
a plurality of treads comprising a plurality of knobbly bits;
a plurality of receiving units configured to receive at least one tread of the plurality of treads;
one or more bearing surface present on at least one of the first end and the second end; and
a coating of a durable material; **characterized in that** the muscular tension releasing system (100B) comprises:
a strap (108), which when in use connects to at least one of the first end and the second end of the therapy device (106) and extends in a lateral direction away from the therapy device (106), the strap (108) comprising:
a plurality of interlocking units (110) configured to connect to each other, wherein the units may be removed or added to adjust the length of the strap (108);
one or more attachment units for attaching to at least one of the one or more bearing surface present on the at least one of the first end and the second end of the therapy device (106); and
at least one holding means for enabling a user to hold the strap (108) for positioning the therapy device (106) according to a body part where the user wants to put pressure on, wherein the strap (108) enables the user to control an amount of pressure exerted by the therapy device (106) on one or more muscles of the body part.

2. The muscular tension releasing system (100B) of claim 1, wherein the one or more holding means includes at least one of a hand holds and a foot holds.

3. The muscular tension releasing system (100B) of claim 1, wherein the one or more holding means are sewn at an interval of 200 millimetre on the strap.

4. The muscular tension releasing system (100B) of claim 1, wherein the rod is formed using a material comprising steel, iron, aluminium, wood, and carbon fibre.

5. The muscular tension releasing system (100B) of claim 1, wherein a material of the plurality of treads comprises at least one of a silicon, rubber, plastic, wood, hard rubber, and polyurethane elastomer.

6. The muscular tension releasing system (100B) of claim 5, wherein the plurality of treads are removable from the plurality of receiving units.

7. The muscular tension releasing system (100B) of claim 1, wherein a shape of the plurality of treads comprises at least one of a hex design, a spiky design, and a twin design comprising a peanut shape for use on both sides of a spine at once.

8. The muscular tension releasing system (100B) of claim 1, wherein the plurality of treads remain in a fixed position for enabling greater pressure and control, or wherein the plurality of treads are configured to rotate for massaging the body part.

9. The muscular tension releasing system (100B) of claim 1, wherein the therapy device (106) further comprises an inbuilt vibration device configured to vibrate one or more treads of the plurality of treads.

10. The muscular tension releasing system (100B) of claim 9, wherein the therapy device (106) further comprises a heating device for heating at least one tread of the plurality of treads.

11. The muscular tension releasing system (100B) of claim 1 further comprising a stand comprising one or more rollers configured to be slotted into the one or more bearing surface of the therapy device (106).

12. The muscular tension releasing system (100B) of claim 1, wherein the strap (108) is formed using a flexible and durable material comprising nylon, cloth, rubber, fabric, and plastic, further wherein at least one end of the strap (108) comprises an anchor for fixing to one of the first end and the second end of the therapy device (106).

13. The muscular tension releasing system (100B) of claim 1 wherein the therapy device (106) is
a modular therapy device formed by assembling a plurality of pieces together, and wherein the therapy device (106) further comprises a heating device for heating one or more treads of the plurality of treads, and an inbuilt vibration device for vibrating the one or more treadsof the plurality of treads; and
a stand comprising one or more rollers configured to be slotted into the one or more bearing surface of the modular therapy device.

14. The muscular tension releasing system (100B) of claim 13, wherein the plurality of treads remain in a fixed position for enabling greater pressure and control, or wherein the plurality of treads is configured to rotate for massaging the body part.

15. The muscular tension releasing system (100B) of claim 13, wherein:
a shape of the plurality of treads comprises at least one of a hex design, a spiky design, and a twin design comprising a peanut shape for use on both sides of a spine at once;
the plurality of removable treads are configured to be removed from the plurality of receiving units of the therapy device (106);
a material of the plurality of treads comprises at least one of a silicon, rubber, plastic, wood, hard rubber, and polyurethane elastomer;
the strap (108) is formed using a flexible and durable material comprising nylon, cloth, and plastic; and
at least one end of the strap (108) comprises an anchor for fixing to one of the first end and the second end of the therapy device (106).

## Patentansprüche

1. System (100B) zum Lösen von Muskelverspannungen, umfassend:
eine Therapievorrichtung (106), umfassend ein erstes Ende, ein zweites Ende und eine längliche Stange, die sich in einer Längsrichtung von dem ersten Ende zu dem zweiten Ende erstreckt, wobei die längliche Stange umfasst:
eine Vielzahl von Profilen, umfassend eine Vielzahl von knolligen Stücken;
eine Vielzahl von Aufnahmeeinheiten, die dazu konfiguriert ist, mindestens ein Profil der Vielzahl von Profilen aufzunehmen;
eine oder mehrere Auflageflächen, die auf mindestens einem von dem ersten Ende und dem zweiten Ende vorliegen; und
eine Beschichtung aus einem haltbaren Material; **dadurch gekennzeichnet, dass** das System (100B) zum Lösen von Muskelverspannungen umfasst:
einen Gurt (108), der sich im Gebrauch mit mindestens einem von dem ersten Ende und dem zweiten Ende der Therapievorrichtung (106) verbindet und sich in einer lateralen Richtung von der Therapievorrichtung (106) weg erstreckt, wobei der Gurt (108) umfasst:
eine Vielzahl von ineinandergreifenden Einheiten (110), die dazu konfiguriert sind, sich miteinander zu verbinden, wobei die Einheiten entfernt oder hinzugefügt werden können, um die Länge des Gurts (108) zu justieren;
eine oder mehrere Anbringungseinheiten zum Anbringen der mindestens einen von der einen oder den mehreren Auflageflächen, die auf dem mindestens einen von dem ersten Ende und dem zweiten Ende der Therapievorrichtung (106) vorliegen; und
mindestens ein Haltemittel, um einem Benutzer zu ermöglichen, den Gurt (108) zum Positionieren der Therapievorrichtung (106) gemäß einem Körperteil, an dem der Benutzer einen Druck ausüben will, zu halten, wobei der Gurt (108) dem Benutzer ermöglicht, einen Druckumfang zu steuern, der von der Therapievorrichtung (106) auf einen oder mehrere Muskeln des Körperteils ausgeübt wird.

2. System (100B) zum Lösen von Muskelverspannungen nach Anspruch 1, wobei das eine oder die mehreren Haltemittel mindestens eine von eine Handhalterung und einer Fußhalterung einschließen.

3. System (100B) zum Lösen von Muskelverspannungen nach Anspruch 1, wobei das eine oder die mehreren Haltemittel in einem Abstand von 200 Millimeter auf dem Gurt genäht sind.

4. System (100B) zum Lösen von Muskelverspannungen nach Anspruch 1, wobei die Stange unter Verwendung eines Materials hergestellt wird, umfassend Stahl, Eisen, Aluminium, Holz und Kohlefaser.

5. System (100B) zum Lösen von Muskelverspannungen nach Anspruch 1, wobei ein Material der Vielzahl von Profilen mindestens eines von einem Silizium, Gummi, Kunststoff, Holz, Hartgummi und Polyurethan-Elastomer umfasst.

6. System (100B) zum Lösen von Muskelverspannungen nach Anspruch 5, wobei die Vielzahl von Profilen von der Vielzahl von Aufnahmeeinheiten entfernbar ist.

7. System (100B) zum Lösen von Muskelverspannungen nach Anspruch 1, wobei eine Form der Vielzahl von Profilen mindestens eines von einem Sechskantdesign, einem Zackendesign und einem Zwillingsdesign, umfassend eine Erdnussform zur gleichzeitigen Verwendung auf beiden Seiten einer Wirbelsäule, umfasst.

8. System (100B) zum Lösen von Muskelverspannungen nach Anspruch 1, wobei die Vielzahl von Profilen in einer fixierten Position zum Ermöglichen eines besseren Drucks und einer besseren Kontrolle bleibt, oder wobei die Vielzahl von Profilen dazu konfiguriert ist, sich zum Massieren des Körperteils zu drehen.

9. System (100B) zum Lösen von Muskelverspannungen nach Anspruch 1, wobei die Therapievorrichtung (106) ferner eine eingebaute Vibrationsvorrichtung umfasst, die dazu konfiguriert ist, ein oder mehrere Profile der Vielzahl von Profilen vibrieren zu lassen.

10. System (100B) zum Lösen von Muskelverspannungen nach Anspruch 9, wobei die Therapievorrichtung (106) ferner eine Erwärmungsvorrichtung zum Erwärmen mindestens eines Profils der Vielzahl von Profilen umfasst.

11. System (100B) zum Lösen von Muskelverspannungen nach Anspruch 1, ferner umfassend einen Ständer, umfassend eine oder mehrere Rollen, die dazu konfiguriert sind, in die eine oder die mehreren Auflageflächen der Therapievorrichtung (106) eingesteckt zu werden.

12. System (100B) zum Lösen von Muskelverspannungen nach Anspruch 1, wobei der Gurt (108) unter Verwendung eines flexiblen und haltbaren Materials hergestellt wird, umfassend Nylon, Tuch, Gummi, Gewebe und Kunststoff, ferner wobei mindestens ein Ende des Gurts (108) einen Anker zum Fixieren an einem von dem ersten Ende und dem zweiten Ende der Therapievorrichtung (106) umfasst.

13. System (100B) zum Lösen von Muskelverspannungen nach Anspruch 1, wobei die Therapievorrichtung (106)
eine modulare Therapievorrichtung ist, die durch Zusammenfügen einer Vielzahl von Teilen gebildet wird, und wobei die Therapievorrichtung (106) ferner eine Erwärmungsvorrichtung zum Erwärmen eines oder mehrerer Profile der Vielzahl von Profilen und eine eingebaute Vibrationsvorrichtung zum Vibrierenlassen des einen oder der mehreren Profile der Vielzahl von Profilen und
einen Ständer, umfassend eine oder mehrere Rollen, die dazu konfiguriert sind, in die eine oder die mehreren Auflageflächen der modularen Therapievorrichtung eingesteckt zu werden, umfasst.

14. System (100B) zum Lösen von Muskelverspannungen nach Anspruch 13, wobei die Vielzahl von Profilen in einer fixierten Position zum Ermöglichen eines besseren Drucks und einer besseren Kontrolle bleibt, oder wobei die Vielzahl von Profilen dazu konfiguriert ist, sich zum Massieren des Körperteils zu drehen.

15. System (100B) zum Lösen von Muskelverspannungen nach Anspruch 13, wobei:
eine Form der Vielzahl von Profilen mindestens eines von einem Sechskantdesign, einem Zackendesign und einem Zwillingsdesign, umfassend eine Erdnussform zur gleichzeitigen Verwendung auf beiden Seiten einer Wirbelsäule, umfasst;
die Vielzahl von entfernbaren Profilen dazu konfiguriert ist, von der Vielzahl von Aufnahmeeinheiten der Therapievorrichtung (106) entfernt zu werden;
ein Material der Vielzahl von Profilen mindestens eines von einem Silizium, Gummi, Kunststoff, Holz, Hartgummi und Polyurethan-Elastomer umfasst;
der Gurt (108) unter Verwendung eines flexiblen und haltbaren Materials hergestellt wird, umfassend Nylon, Tuch und Kunststoff; und
mindestens ein Ende des Gurts (108) einen Anker zum Fixieren an einem von dem ersten Ende und dem zweiten Ende der Therapievorrichtung (106) umfasst.

## Revendications

1. Un système de libération de tension musculaire (100B) comprenant :
un dispositif thérapeutique (106) comprenant une première extrémité, une seconde extrémité et une tige allongée s'étendant de la première extrémité à la seconde extrémité dans une direction longitudinale, la tige allongée comprenant :
une pluralité de bandes de roulement comprenant une pluralité de reliefs bosselés ;
une pluralité d'unités de réception configurées pour recevoir au moins une bande de roulement de la pluralité de bandes de roulement ;
une ou plusieurs surfaces d'appui présentes sur au moins l'une de la première et de la seconde extrémité ; et
un revêtement en matériau durable ; **caractérisé en ce que** le système de libération de tension musculaire (100B) comprend :
une sangle (108) qui, lors de son utilisation, se connecte à au moins l'une des première et seconde extrémités du dispositif thérapeutique (106) et s'étend dans une direction latérale à l'opposé du dispositif thérapeutique (106), la sangle (108) comprenant :
une pluralité d'unités de verrouillage (110) configurées pour se connecter les unes aux autres, les unités pouvant être retirées ou ajoutées pour ajuster la longueur de la sangle (108) ;
une ou plusieurs unités de fixation destinées à être fixées à au moins une des surfaces d'appui présentes sur au moins une des première et seconde extrémités du dispositif thérapeutique (106) ; et
au moins un moyen de maintien permettant à un utilisateur de maintenir la sangle (108) pour positionner le dispositif thérapeutique (106) en fonction d'une partie du corps sur laquelle l'utilisateur souhaite exercer une pression, la sangle (108) permettant à l'utilisateur de contrôler une quantité de pression exercée par le dispositif thérapeutique (106) sur un ou plusieurs muscles de la partie du corps.

2. Le système de libération de tension musculaire (100B) selon la revendication 1, dans lequel le ou les moyens de maintien comprennent au moins une poignée de main et une poignée de pied.

3. Le système de libération de tension musculaire (100B) selon la revendication 1, dans lequel le ou les moyens de maintien sont cousus à un intervalle de 200 millimètres sur la sangle.

4. Le système de libération de tension musculaire (100B) selon la revendication 1, dans lequel la tige est formée à partir d'un matériau comprenant de l'acier, du fer, de l'aluminium, du bois et de la fibre de carbone.

5. Le système de libération de tension musculaire (100B) selon la revendication 1, dans lequel un matériau de la pluralité de bandes de roulement comprend au moins un matériau parmi un silicone, caoutchouc, plastique, bois, caoutchouc dur et un élastomère de polyuréthane.

6. Le système de libération de tension musculaire (100B) selon la revendication 5, dans lequel la pluralité de bandes de roulement est amovible à partir de la pluralité d'unités de réception.

7. Le système de libération de tension musculaire (100B) selon la revendication 1, dans lequel une forme de la pluralité de bandes de roulement comprend au moins une conception hexagonale, une conception en pointe et une conception double comprenant une forme d'arachide destinée à être utilisée sur les deux côtés d'une colonne vertébrale à la fois.

8. Le système de libération de tension musculaire (100B) selon la revendication 1, dans lequel la pluralité de bandes de roulement reste dans une position fixe pour permettre une pression et un contrôle plus importants, ou dans lequel la pluralité de bandes de roulement est configurée pour tourner et masser la partie du corps.

9. Le système de libération de tension musculaire (100B) selon la revendication 1, dans lequel le dispositif thérapeutique (106) comprend en outre un dispositif de vibration intégré configuré pour faire vibrer une ou plusieurs bandes de roulement de la pluralité de bandes de roulement.

10. Le système de libération de tension musculaire (100B) selon la revendication 9, dans lequel le dispositif thérapeutique (106) comprend en outre un dispositif de chauffage pour chauffer au moins une bande de roulement de la pluralité de bandes de roulement.

11. Le système de libération de tension musculaire (100B) selon la revendication 1, comprenant en outre un support comprenant un ou plusieurs rouleaux configurés pour être insérés dans la ou les surfaces d'appui du dispositif thérapeutique (106).

12. Le système de libération de tension musculaire (100B) selon la revendication 1, dans lequel la sangle (108) est formée à partir d'un matériau flexible et durable comprenant du nylon, du tissu, du caoutchouc, du tissu et du plastique, en outre dans lequel au moins une extrémité de la sangle (108) comprend un ancrage pour la fixation à l'une de la première extrémité et de la seconde extrémité du dispositif thérapeutique (106).

13. Le système de libération de tension musculaire (100B) selon la revendication 1, dans lequel le dispositif thérapeutique (106) est un dispositif thérapeutique modulaire formé par l'assemblage de plusieurs pièces, et dans lequel le dispositif thérapeutique (106) comprend en outre un dispositif de chauffage pour chauffer une ou plusieurs bandes de roulement de la pluralité de bandes de roulement, et un dispositif de vibration intégré pour faire vibrer une ou plusieurs bandes de roulement de la pluralité de bandes de roulement ; et
un support comprenant un ou plusieurs rouleaux configurés pour être insérés dans une ou plusieurs surfaces d'appui du dispositif thérapeutique modulaire.

14. Le système de libération de tension musculaire (100B) selon la revendication 13, dans lequel la pluralité de bandes de roulement reste dans une position fixe pour permettre une pression et un contrôle plus importants, ou dans lequel la pluralité de bandes de roulement est configurée pour tourner et masser la partie du corps.

15. Le système de libération de tension musculaire (100B) selon la revendication 13, dans lequel :
une forme de la pluralité de bandes de roulement comprend au moins une conception hexagonale, une conception en pointe et une conception double comprenant une forme d'arachide destinée à être utilisée des deux côtés d'une colonne vertébrale à la fois ;
la pluralité de bandes de roulement amovibles est configurée pour être retirée de la pluralité d'unités de réception du dispositif thérapeutique (106) ;
un matériau de la pluralité de bandes de roulement comprend au moins un élastomère parmi le silicone, caoutchouc, plastique, bois, caoutchouc dur et le polyuréthane ;
la sangle (108) est formée à partir d'un matériau flexible et durable comprenant du nylon, du tissu et du plastique ; et
au moins une extrémité de la sangle (108) comprend un ancrage pour la fixation à l'une de la première extrémité et de la seconde extrémité du dispositif thérapeutique (106).
